# EUROPÄISCHE PATENTANMELDUNG

(11) **EP 2 287 781 A2**
(43) Veröffentlichungstag der Anmeldung: **23.02.2011**
(21) Anmeldenummer: 10007879.9
(22) Anmeldetag: 29.07.2010
(51) Int. Cl.: G06K 9/00, B23Q 5/00

(54) **Verfahren zur Verarbeitung von Werkstücken**

(30) Priorität: 29.07.2009 DE 102009035121
(71) Anmelder: Tekfor Cologne Gmbh, 50725 Köln (DE)
(72) Erfinder: Jacoby, Nikolaus, 40880 Ratingen (DE)
(74) Vertreter: Dörfler, Thomas

(57) **Zusammenfassung**

Die Erfindung bezieht sich auf ein Verfahren zur Verarbeitung von Werkstücken, wobei mindestens ein Werkstück in einer Kiste angeordnet ist und wobei aus der Kiste mindestens ein Werkstück entnommen und einer Verarbeitungseinheit zugeführt wird. Weiterhin bezieht sich die Erfindung auf eine Vorrichtung zur Verarbeitung von Werkstücken, wobei mindestens ein Werkstück in einer Kiste angeordnet ist, und auf ein Verfahren zur Entnahme mindestens eines Werkstücks aus einer Kiste.

## Beschreibung

Die Erfindung bezieht sich auf ein Verfahren zur Verarbeitung von Werkstücken, wobei mindestens ein Werkstück in einer Kiste angeordnet ist. Weiterhin bezieht sich die Erfindung auf eine Vorrichtung zur Verarbeitung von Werkstücken, wobei mindestens ein Werkstück in einer Kiste angeordnet ist. Und schließlich bezieht sich die Erfindung auf ein Verfahren zur Entnahme mindestens eines Werkstücks aus einer Kiste.

Im Stand der Technik ist es bekannt, bei Fertigungs- oder Verarbeitungsprozessen Roboter einzusetzen, welche einzelne Fertigungsschritte ausführen oder unterstützen. Dabei wird oft vorausgesetzt, dass sich Werkstücke oder Komponenten in einer vordefinierten Position mit einer vorbekannten Orientierung befinden, damit ein Roboter gezielt auf den Gegenstand zugreifen kann. Problematisch ist es somit, wenn Werkstücke, z.B. aufgrund eines vorhergehenden Prozessschrittes ungeordnet vorliegen (siehe z.B. die Gebrauchsmusterschrift DE 90 15 149 U1). Für solche Anwendungsfälle wird beispielsweise aufgrund von Kameradaten eine Objekterkennung durchgeführt (siehe z.B. die Offenlegungsschrift DE 10 2007 024 640 A1). Dies ist zumeist sehr zeitaufwändig oder erfordert große Rechenleistung.

Der Erfindung liegt die Aufgabe zugrunde, die Weiterverarbeitung von ungeordneten Werkstücken zu beschleunigen.

Die Erfindung löst die Aufgabe durch ein Verfahren zur Verarbeitung von Werkstücken, durch eine Vorrichtung zur Verarbeitung von Werkstücken und durch ein Verfahren zur Entnahme mindestens eines Werkstücks aus einer Kiste.

Die Aufgabe wird erfindungsgemäß gelöst durch ein Verfahren zur Verarbeitung von Werkstücken, wobei mindestens ein Werkstück in einer Kiste angeordnet ist. Dabei ist vorgesehen, dass mindestens eine Temperaturverteilung mindestens eines Abschnittes der Kiste ermittelt wird, dass mindestens anhand der ermittelten Temperaturverteilung mindestens ein Bereich ausgewählt wird, welcher gemäß der ermittelten Temperaturverteilung mindestens einen Temperaturwert innerhalb eines vorgegebenen Temperaturbereichs oder unterhalb oder oberhalb eines vorgegebenen Temperaturgrenzwertes aufweist, und dass aus der Kiste mindestens ein Werkstück entnommen und einer Verarbeitungseinheit zugeführt wird. Die Idee besteht somit darin, eine Aufnahme der thermischen Verteilung der Kiste - oder allgemein des Ortes, an welchem sich Werkstücke befinden - zu erstellen und davon ausgehend mindestens ein Werkstück der Kiste zu entnehmen. Kiste sei dabei allgemein als Behälter für Gegenstände, z.B. als Container oder als Aufbewahrungseinheit verstanden. Eine Kiste kann dabei mobil und fest installiert sein und sie kann seitlich begrenzt oder offen ausgestaltet sein. Kiste sei auch allgemein als Fläche oder Förderband verstanden. Aufgrund der Aufnahme des Temperaturverlaufs in der Kiste wird ein Bereich ausgewählt, welcher sich durch wenigstens einen Temperaturwert auszeichnet. Dabei handelt es sich beispielsweise um einen Mittelwert über eine Fläche oder um einen Spitzenwert, z.B. ebenfalls innerhalb einer Fläche oder in Relation zu anderen Temperaturwerten. Für die Auswertung wird beispielsweise der von der Aufnahme der Temperaturverteilung betroffene Bereich in gleichmäßige oder beliebig definierte Planquadrate aufgeteilt, welche gegeneinander oder gegen Referenzwerte verglichen werden. In einer alternativen oder ergänzenden Ausgestaltung werden ausgehend von Isothermen dynamische Auswertungsbereiche erstellt und für die Auswertung herangezogen.

Eine Ausgestaltung sieht vor, dass eine Greifeinheit solange in dem ausgewählten Bereich bewegt wird, bis die Greifeinheit mindestens ein Werkstück erfasst. In dieser Ausgestaltung bewegt sich die Greifeinheit nur innerhalb des ausgewählten Bereiches, bis ein Werkstück ergriffen wird. Es wird somit nur ein kleinerer Bereich der Kiste abgesucht oder abgetastet. Beispielsweise handelt es sich um einen federgelagerten Magneten, welcher über die Kiste bewegt wird, bis sich ein Werkstück herausziehen lässt.

Eine Ausgestaltung beinhaltet, dass mindestens anhand der ermittelten Temperaturverteilung eine Position und/oder eine Orientierung mindestens eines Ziel-Werkstücks in der Kiste und/oder in dem ausgewählten Bereich ermittelt wird. In dieser Ausgestaltung wird die ermittelte Temperaturverteilung dahingehend ausgewertet, dass die Lage bzw. die Orientierung eines Werkstücks erkannt wird. Somit ist beispielsweise eine rechnergestützte Objekterkennung erforderlich, für welche ggf. Geometriedaten der Werkstücke in einer Datenbank hinterlegt sind.

Eine Ausgestaltung sieht vor, dass der ausgewählte Bereich mit einem optischen Verfahren oder mit einem Laufzeitverfahren vermessen wird, und dass mindestens anhand der Daten der Vermessung des ausgewählten Bereichs eine Position und/oder eine Orientierung mindestens eines Ziel-Werkstücks ermittelt wird. In dieser Ausgestaltung erfolgt die Auswahl des Bereichs über die Auswertung der Temperaturverteilung und anschließend wird der Bereich mit einem optischen oder mit einem Laufzeitverfahren vermessen. Alternativ wird erneut eine Temperaturverteilung ermittelt, jedoch mit einer höheren Orts- und/oder Temperaturauflösung. Es wird somit beispielsweise eine optische Kamera oder ein Laserscanner verwendet. Aus dieser Vermessung ergeben sich beispielsweise genauere Daten oder auch Informationen über die Höhenlagen. Beispielsweise werden dreidimensionale Daten über die Kiste und deren Inhalt gewonnen. Eine solche Vermessung und deren Auswertung nimmt im Allgemeinen relativ viel Zeit in Anspruch. Durch die Auswahl des Bereichs ist jedoch nicht die gesamte Kiste, sondern nur ein Teil davon zu vermessen. Somit kann je nach Größe des ausgewählten Bereichs in Relation zur Größe der Kiste Zeit eingespart werden. Vorzugsweise ist der Bereich dabei mindestens in einer Richtung größer als die längste Ausdehnung der Werkstücke in einer Richtung, d.h. die Werkstücke sollten in wenigstens einer Richtung in den Bereich hineinpassen. In dem Fall, dass die Messeinheit zur Vermessung des Bereichs eine Positionsveränderung erfährt, kann die Verschiebegeschwindigkeit außerhalb des ausgewählten Bereichs deutlich höher sein als im ausgewählten Bereich.

Eine Ausgestaltung beinhaltet, dass mindestens ein Abschnitt der Kiste mit einem optischen Verfahren oder mit einem Laufzeitverfahren vermessen wird, und dass im Wesentlichen nur anhand der Daten der Vermessung des mindestens einen Abschnittes der Kiste, die sich auf den ausgewählten Bereich beziehen, eine Position und/oder eine Orientierung mindestens eines Ziel-Werkstücks ermittelt wird. In dieser Ausgestaltung wird beispielsweise ein größerer Bereich als der ausgewählte Bereich oder ein damit überlappender Bereich vermessen. Die Auswertung konzentriert sich auf den ausgewählten Bereich. In einer Ausgestaltung wird somit die Kiste - d.h. vorzugsweise die Seite der Kiste, über welche die Werkstücke zugänglich sind - im Wesentlichen vollständig vermessen, und die Auswertung beschränkt sich auf den ausgewählten Bereich. Dies ist beispielsweise vorteilhaft für den Fall, dass die Vermessung durch eine Beschränkung des Aufnahmebereichs nicht wesentlich beschleunigt werden kann oder dass dies zu aufwändig wäre. Der Zeitgewinn ergibt sich somit durch die Einsparung der Verarbeitungszeit der Vermessungsdaten.

Eine Ausgestaltung sieht vor, dass anhand der ermittelten Position und/oder der ermittelten Orientierung des mindestens einen Ziel-Werkstücks eine Greifeinheit gesteuert wird. In dieser Ausgestaltung wird ausgehend von den Auswertungsdaten, welche sich aus der Temperaturverteilung oder aus der Vermessung ergeben, eine Greifeinheit gezielt gesteuert, so dass sie vorzugsweise ein Werkstück ergreifen und somit aus der Kiste befördern kann.

Eine Ausgestaltung beinhaltet, dass die Greifeinheit derartig angesteuert wird, dass mindestens eine regelbare Kraft das Ziel-Werkstück in eine Passform der Greifeinheit bewegt. In dieser Ausgestaltung wird das Werkstück in eine Passform hereingezogen, im Gegensatz zum reinen Ergreifen des Werkstücks mit einem insbesondere mechanischen (formschlüssigen) Greifer als ergänzende oder alternative Umsetzung.

Eine Ausgestaltung sieht vor, dass mindestens eine regelbare elektro-magnetische Kraft das Ziel-Werkstück in die Passform der Greifeinheit zieht. Alternativ bzw. ergänzend wird das Ziel-Werkstück angesaugt.

Eine Ausgestaltung beinhaltet, dass mindestens eine Position der Kiste ermittelt wird. Hat die Kiste nicht immer die identische Position relativ zur Greifeinheit oder relativ zu den Messeinheit für die Temperaturverteilung bzw. der Vermessung inne, so wird in dieser Ausgestaltung vorzugsweise zuerst die Position der Kiste ermittelt. Dies kann beispielsweise über die genannten Messeinheiten erfolgen, wobei die Kiste beispielsweise über Markierungselemente (z.B. Heizdrähte) verfügt. Dies kann aber beispielsweise auch durch Näherungssensoren erfolgen.

Eine Ausgestaltung sieht vor, dass die Kiste und/oder das mindestens eine Werkstück in der Kiste mindestens einer Wärmequelle oder einer Wärmesenke ausgesetzt wird. In dieser Ausgestaltung wird der Kiste und den in ihr befindlichen Werkstücken Wärme zugeführt oder es wird Wärme abgeführt. Dies kann auch passend kombiniert werden. Dies ist beispielsweise vorteilhaft, wenn sich in der Kiste eine thermische Gleichverteilung eingestellt hat. Beispiele für die Realisierung sind Pressluft oder Wärmestrahler.

Eine Ausgestaltung beinhaltet, dass das entnommene Werkstück in der Verarbeitungseinheit umgeformt, wärmebehandelt, spanend bearbeitet, beschichtet und/oder mit einer anderen Komponente zusammengefügt wird. Das entnommene Werkstück wird in der Verarbeitungseinheit beispielsweise erhitzt, gehärtet, beschichtet, spanend bearbeitet oder plastisch verformt. Beispielsweise wird in der Verarbeitungseinheit mindestens eine Eigenschaft der Oberfläche des entnommenen Werkstücks bis zu einer vorgebbaren Eindringtiefe verändert. Alternativ oder ergänzend wird in der Verarbeitungseinheit das entnommene Werkstück mit einem anderen Werkstück kontaktiert. Alternativ wird das Werkstück in einer Verpackungs- oder Transporteinheit abgelegt.

Die Erfindung löst die Aufgabe weiterhin durch eine Vorrichtung zur Verarbeitung von Werkstücken, wobei mindestens ein Werkstück in einer Kiste angeordnet ist. Die Vorrichtung ist **dadurch gekennzeichnet, dass** mindestens eine Wärmebildkamera vorgesehen ist, dass mindestens eine Steuereinheit vorgesehen ist, wobei die Steuereinheit derartig ausgestaltet ist, dass sie aus den Daten der Wärmebildkamera einen Bereich auswählt, welcher mindestens einen Temperaturwert innerhalb eines vorgegebenen Temperaturbereichs oder unterhalb oder oberhalb eines vorgegebenen Temperaturgrenzwertes aufweist, und dass mindestens eine Greifeinheit vorgesehen ist, wobei die Greifeinheit aus der Kiste mindestens ein Werkstück entnimmt und das Werkstück einer Verarbeitungseinheit zuführt. Für die Vorrichtung gelten insbesondere die oben genannten
Verfahrensausgestaltungen.

Eine Ausgestaltung sieht vor, dass mindestens eine nach einem optischen Verfahren oder nach einem Laufzeitverfahren arbeitende Messeinheit vorgesehen ist, und dass die Steuereinheit die Messeinheit steuert und/oder die Messdaten der Messeinheit auswertet.

Eine Ausgestaltung beinhaltet, dass mindestens eine Krafterzeugungseinheit vorgesehen ist, dass mindestens eine Passform vorgesehen ist, und dass die Krafterzeugungseinheit und die Passform derartig ausgestaltet und aufeinander abgestimmt sind, dass die Krafterzeugungseinheit mindestens ein Werkstück in die Passform bewegt.

Eine Ausgestaltung sieht vor, dass es sich bei der Krafterzeugungseinheit im Wesentlichen um einen Elektromagneten handelt.

Eine Ausgestaltung beinhaltet, dass mindestens eine Wärmequelle und/oder eine Wärmesenke vorgesehen ist.

Schließlich löst die Erfindung die Aufgabe durch ein Verfahren zur Entnahme mindestens eines Werkstücks aus einer Kiste. Dabei ist vorgesehen, dass mindestens eine Temperaturverteilung mindestens eines Abschnittes der Kiste ermittelt wird, dass mindestens anhand der ermittelten Temperaturverteilung mindestens ein Bereich ausgewählt wird, welcher gemäß der ermittelten Temperaturverteilung mindestens einen Temperaturwert innerhalb eines vorgegebenen Temperaturbereichs oder unterhalb oder oberhalb eines vorgegebenen Temperaturwertes aufweist, und dass aus der Kiste mindestens ein Werkstück entnommen wird.

Die oben besprochenen Ausgestaltungen des Verarbeitungsverfahrens gelten entsprechend auch für das Verfahren zur Entnahme eines Werkstücks.

Die Erfindung wird anhand einiger in den Figuren dargestellter Ausführungsbeispiele näher erläutert. Dabei zeigen:
Fig. 1: eine schematische Darstellung einer Umsetzung der Erfindung,
Fig. 2: eine schematische Darstellung einer Umsetzung der Erfindung mit einer Verarbeitungseinheit,
Fig. 3: eine räumliche Darstellung einer Umsetzung der Erfindung, und
Fig. 4: eine räumliche Darstellung eines Bestandteils der Greifeinheit mit einem Werkstück.

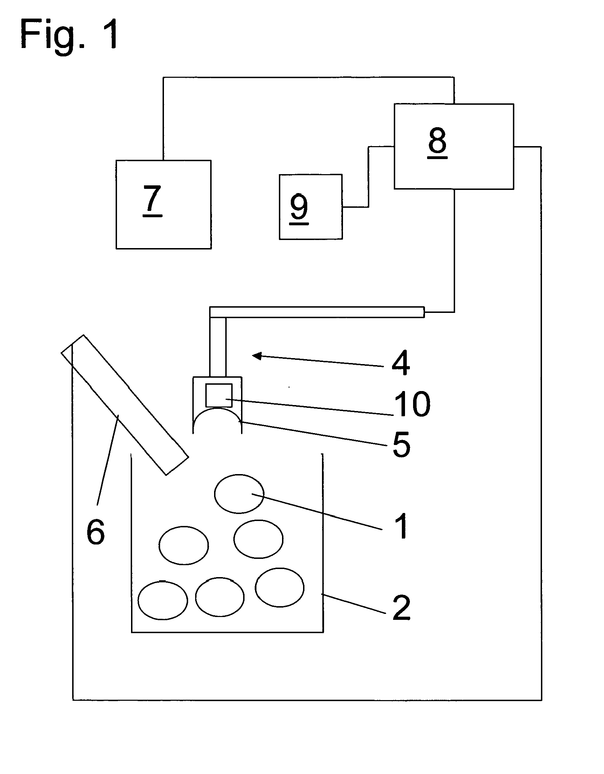

Die Fig. 1 verdeutlicht schematisch eine Umsetzung der Erfindung. In einer Kiste 2 befinden sich ungeordnet Werkstücke 1, welche beispielweise aus einer Umformanlage kommen oder welche von einer Stange abgeschert worden sind. Die Werkstücke 1 sind dabei im Wesentlichen unstrukturiert oder strukturiert und es handelt sich um unterschiedliche oder im Wesentlichen identische Elemente. Eine Wärmebildkamera 7 nimmt eine Temperaturverteilung der Kiste 2 auf, vorzugsweise bezogen auf die Seite, auf welcher die Werkstücke 1 einem Zugriff bzw. einer Entnahme zugänglich sind. Die Temperaturverteilung wird einer Steuereinheit 8 zugeführt, welche in dieser Ausgestaltung noch mit einer weiteren Messeinheit 9 verbunden ist. Die Messeinheit 9 ist beispielsweise ein Laserscanner, über welchen die Kiste 1 vermessen werden kann. Erfindungsgemäß wählt die Steuereinheit 8 ausgehend von der ermittelten Temperaturverteilung einen Bereich aus, welcher beispielsweise einen Temperaturwert oberhalb oder unterhalb eines vorgegebenen Grenzwertes aufweist. Für die Auswertung wird beispielsweise in einer Konstellation davon ausgegangen, dass das Werkstück mit der höchsten Temperatur auch an oberster Stelle liegt. Dann wird in einer Ausgestaltung dieser ausgewählte Bereich gezielt mit der Messeinheit 9 vermessen. Alternativ oder ergänzend wird im ausgewählten Bereich die Temperaturverteilung erneut, jedoch mit einer höheren Auflösung aufgenommen. Ausgehend von den Vermessungsdaten wird von der Steuereinheit 8 die Lage und/oder die Orientierung eines Ziel-Werkstücks in der Kiste 2 ermittelt. D.h. es wird innerhalb des ausgewählten Bereichs gezielt ein Werkstück ausgesucht. Die Greifeinheit 4 wird mit den berechneten Daten von der Steuereinheit 8 in diese Richtung gelenkt, bzw. wird insbesondere die Passform 5 ausgerichtet. In der dargestellten und beispielhaften Ausgestaltung verfügt die Greifeinheit 5 oberhalb der Passform 5 über einen Elektromagneten als Krafterzeugungseinheit 10, welche vorzugsweise gezielt, d.h. mit einer regel- oder steuerbaren Magneteinheit das jeweils gewünschte Werkstück 1 in die Passform 5 hineinzieht. Kann die Greifeinheit 4 das Ziel-Werkstück nicht erfassen, weil es beispielsweise verklemmt ist, so wird in einer Ausgestaltung von der Steuereinheit 8 ein anderes Ziel-Werkstück ausgewählt.

Um bei einer thermischen Gleichverteilung das Verfahren zu ermöglichen bzw. um höhere Temperaturdifferenzen zu erhalten, ist eine Wärmequelle 6 vorgesehen, welche beispielsweise einen warmen Luftstrom in Richtung der Kiste 2 bzw. der Werkstücke 1 bläst. Alternativ kann auch in oder an der Kiste eine Wärme- bzw. Kühlungseinheit vorgesehen sein.

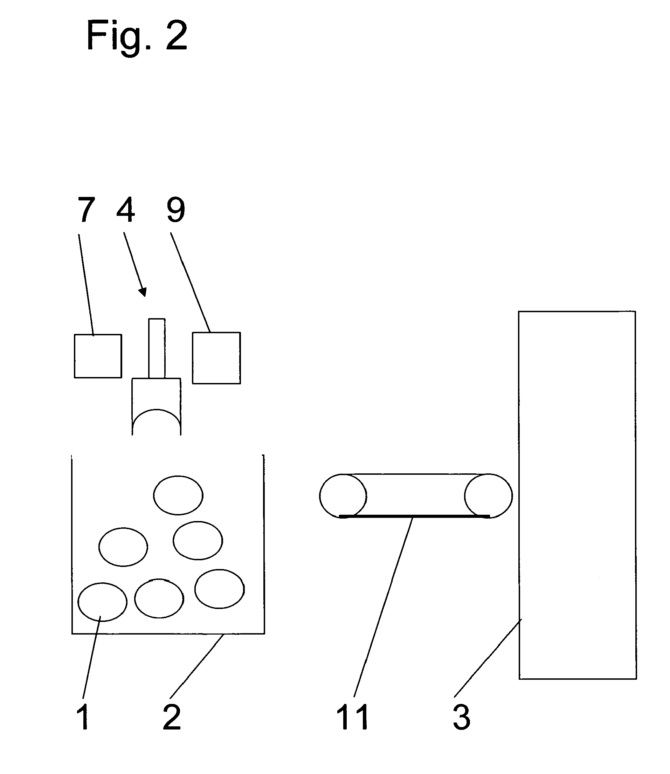

In der Fig. 2 ist schematisch dargestellt, dass sich neben der Kiste 2 ein Transportband 11 befindet, auf welches die Greifeinheit 4 das Werkstück 1 passend ablegt und über welches das Werkstück 1 einer Verarbeitungseinheit 3 zugeführt wird. Die Greifeinheit 4 kann dabei das Werkstück 1 ggf. auch direkt in die Verarbeitungseinheit 3 einbringen. In der Verarbeitungseinheit 3 wird das Werkstück beispielsweise umgeformt, wärmebehandelt (z.B. gehärtet), spanend bearbeitet (z.B. gefräst), beschichtet oder mit anderen Komponenten zusammengefügt. Alternativ wird das Werkstück in eine Verpackungs- oder Transporteinheit eingebracht.

In einer weiteren Ausgestaltung werden mehrere Kisten 2 parallel bearbeitet, indem beispielsweise bei einer Kiste das Thermobild noch ausgewertet wird, während bei der anderen Kiste die Greifeinheit bereits ein Werkstück erfasst und während bei einer dritten Kiste die Vermessung gerade vorgenommen wird.

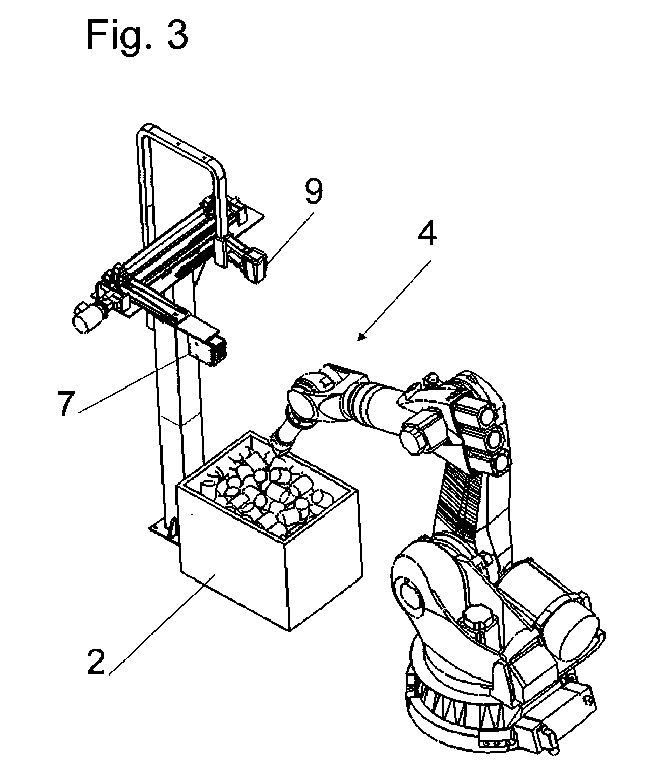

Die Fig. 3 zeigt eine detaillierte Umsetzung der Erfindung, bei welcher die Greifeinheit 4 mit einem Industrieroboter verbunden ist. Die Wärmebildkamera 7 und die Messeinheit sind längs einer Schiene angeordnet. Zu erkennen ist, dass die Werkstücke 1 in der Kiste 2 ungeordnet und in unterschiedlichen Orientierungen liegen.

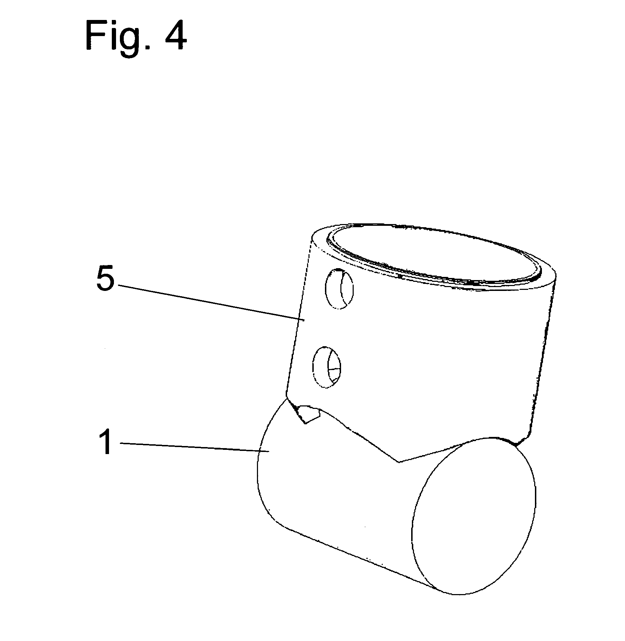

Die Fig. 4 zeigt eine Passform 5, in welcher sich ein hier zylindrisches Werkstück 1 befindet. Die Passform 5 ist vorzugsweise derartig ausgestaltet, dass sie Werkstücke in unterschiedlicher Orientierung aufnehmen kann. Vorzugsweise ist auch der Elektromagnet derartig ausgestaltet, dass er ein Feld passend zur Orientierung des Werkstücks 1 aufbaut, z.B. auch um nur eines von benachbarten Werkstücken zu erfassen.

## Patentansprüche

1. Verfahren zur Verarbeitung von Werkstücken,
wobei mindestens ein Werkstück in einer Kiste angeordnet ist,
**dadurch gekennzeichnet,**
**dass** mindestens eine Temperaturverteilung mindestens eines Abschnittes der Kiste ermittelt wird,
**dass** mindestens anhand der ermittelten Temperaturverteilung mindestens ein Bereich ausgewählt wird, welcher gemäß der ermittelten Temperaturverteilung mindestens einen Temperaturwert innerhalb eines vorgegebenen Temperaturbereichs oder unterhalb oder oberhalb eines vorgegebenen Temperaturgrenzwertes aufweist,
und
**dass** aus der Kiste mindestens ein Werkstück entnommen und einer Verarbeitungseinheit zugeführt wird.

2. Verfahren nach Anspruch 1,
**dadurch gekennzeichnet,**
**dass** eine Greifeinheit solange in dem ausgewählten Bereich bewegt wird, bis die Greifeinheit mindestens ein Werkstück erfasst.

3. Verfahren nach Anspruch 1 oder 2,
**dadurch gekennzeichnet,**
**dass** mindestens anhand der ermittelten Temperaturverteilung eine Position und/oder eine Orientierung mindestens eines Ziel-Werkstücks in der Kiste und/oder in dem ausgewählten Bereich ermittelt wird.

4. Verfahren nach Anspruch 1 oder 2,
**dadurch gekennzeichnet,**
**dass** der ausgewählte Bereich mit einem optischen Verfahren oder mit einem Laufzeitverfahren vermessen wird,
und
**dass** mindestens anhand der Daten der Vermessung des ausgewählten Bereichs eine Position und/oder eine Orientierung mindestens eines Ziel-Werkstücks ermittelt wird.

5. Verfahren nach Anspruch 1 oder 2,
**dadurch gekennzeichnet,**
**dass** mindestens ein Abschnitt der Kiste mit einem optischen Verfahren oder mit einem Laufzeitverfahren vermessen wird,
und
**dass** im Wesentlichen nur anhand der Daten der Vermessung des mindestens einen Abschnittes der Kiste, die sich auf den ausgewählten Bereich beziehen, eine Position und/oder eine Orientierung mindestens eines Ziel-Werkstücks ermittelt wird.

6. Verfahren nach einem der Ansprüche 1 bis 5,
**dadurch gekennzeichnet,**
**dass** anhand der ermittelten Position und/oder der ermittelten Orientierung des mindestens einen Ziel-Werkstücks eine Greifeinheit gesteuert wird.

7. Verfahren nach Anspruch 6,
**dadurch gekennzeichnet,**
**dass** die Greifeinheit derartig angesteuert wird, dass mindestens eine regelbare Kraft das Ziel-Werkstück in eine Passform der Greifeinheit bewegt.

8. Verfahren nach Anspruch 7,
**dadurch gekennzeichnet,**
**dass** mindestens eine regelbare elektro-magnetische Kraft das Ziel-Werkstück in die Passform der Greifeinheit zieht.

9. Verfahren nach einem der Ansprüche 1 bis 8,
**dadurch gekennzeichnet,**
**dass** mindestens eine Position der Kiste ermittelt wird.

10. Verfahren nach einem der Ansprüche 1 bis 9,
**dadurch gekennzeichnet,**
**dass** die Kiste und/oder das mindestens eine Werkstück in der Kiste mindestens einer Wärmequelle oder einer Wärmesenke ausgesetzt wird.

11. Verfahren nach einem der Ansprüche 1 bis 10,
**dadurch gekennzeichnet,**
**dass** das entnommene Werkstück in der Verarbeitungseinheit umgeformt, wärmebehandelt, spanend bearbeitet, beschichtet und/oder mit einer anderen Komponente zusammengefügt wird.

12. Vorrichtung zur Verarbeitung von Werkstücken,
wobei mindestens ein Werkstück in einer Kiste angeordnet ist,
**dadurch gekennzeichnet,**
**dass** mindestens eine Wärmebildkamera vorgesehen ist,
**dass** mindestens eine Steuereinheit vorgesehen ist,
wobei die Steuereinheit derartig ausgestaltet ist, dass sie aus den Daten der Wärmebildkamera einen Bereich auswählt, welcher mindestens einen Temperaturwert innerhalb eines vorgegebenen Temperaturbereichs oder unterhalb oder oberhalb eines vorgegebenen Temperaturgrenzwertes aufweist,
und
**dass** mindestens eine Greifeinheit vorgesehen ist,
wobei die Greifeinheit aus der Kiste mindestens ein Werkstück entnimmt und das Werkstück einer Verarbeitungseinheit zuführt.

13. Vorrichtung nach Anspruch 12,
**dadurch gekennzeichnet,**
**dass** mindestens eine nach einem optischen Verfahren oder nach einem Laufzeitverfahren arbeitende Messeinheit vorgesehen ist,
und
**dass** die Steuereinheit die Messeinheit steuert und/oder die Messdaten der Messeinheit auswertet.

14. Vorrichtung nach Anspruch 12 oder 13,
**dadurch gekennzeichnet,**
**dass** mindestens eine Krafterzeugungseinheit vorgesehen ist,
**dass** mindestens eine Passform vorgesehen ist,
und
**dass** die Krafterzeugungseinheit und die Passform derartig ausgestaltet und aufeinander abgestimmt sind, dass die Krafterzeugungseinheit mindestens ein Werkstück in die Passform bewegt.

15. Vorrichtung nach Anspruch 14,
**dadurch gekennzeichnet,**
**dass** es sich bei der Krafterzeugungseinheit im Wesentlichen um einen Elektromagneten handelt.

16. Vorrichtung nach einem der Ansprüche 12 bis 15,
**dadurch gekennzeichnet,**
**dass** mindestens eine Wärmequelle und/oder eine Wärmesenke vorgesehen ist.

17. Verfahren zur Entnahme mindestens eines Werkstücks aus einer Kiste, **dadurch gekennzeichnet,**
**dass** mindestens eine Temperaturverteilung mindestens eines Abschnittes der Kiste ermittelt wird,
**dass** mindestens anhand der ermittelten Temperaturverteilung mindestens ein Bereich ausgewählt wird, welcher gemäß der ermittelten Temperaturverteilung mindestens einen Temperaturwert innerhalb eines vorgegebenen Temperaturbereichs oder unterhalb oder oberhalb eines vorgegebenen Temperaturwertes aufweist,
und
**dass** aus der Kiste mindestens ein Werkstück entnommen wird.

18. Verfahren nach Anspruch 17 und mindestens einem der Ansprüche 2 bis 10.
